# FASCICULE DE BREVET EUROPEEN

(11) **EP 3 864 465 B1**
(45) Date de publication et mention de la délivrance du brevet: **15.11.2023**
(21) Numéro de dépôt: 19823796.8
(22) Date de dépôt: 09.10.2019
(51) Int. Cl.: G02F 1/35

(54) **SYSTÈME ET PROCÉDÉ DE COMPRESSION D'IMPULSIONS LUMINEUSES BREVES OU ULTRABREVES ET SYSTÈME LASER À IMPULSIONS LUMINEUSES ASSOCIÉ**
SYSTEM UND VERFAHREN ZUM KOMPRIMIEREN VON KURZEN ODER ULTRAKURZEN LICHTIMPULSEN UND ZUGEHÖRIGES LICHTGEPULSTES LASERSYSTEM
SYSTEM AND METHOD FOR COMPRESSING SHORT OR ULTRA-SHORT LIGHT PULSES, AND ASSOCIATED LIGHT-PULSED LASER SYSTEM

(30) Priorité: 10.10.2018 FR 1859397
(43) Date de publication de la demande: 18.08.2021
(73) Titulaire: Amplitude, 33600 Pessac (FR); Centre national de la recherche scientifique, 75016 Paris (FR)
(72) Inventeur: ZAOUTER, Yoann, 92100 Boulogne-Billancourt (FR); GUICHARD, Florent, 75002 Paris (FR); LAVENU, Loïc, 92340 Bourg-la-Reine (FR); HANNA, Marc, 91470 Limours (FR)
(74) Mandataire: Jacobacci Coralis Harle
(86) Numéro de dépôt international: PCT/FR2019/052393
(87) Numéro de publication internationale: WO 2020/074827

(56) Documents cités:
- US-A- 5 956 173
- US-A1- 2012 002 269
- US-A1- 2017 125 964
- US-B2- 9 219 344

## Description

### DOMAINE TECHNIQUE AUQUEL SE RAPPORTE L'INVENTION

La présente invention concerne de manière générale le domaine des systèmes laser permettant de générer des impulsions lumineuses ultrabrèves de forte puissance et/ou de forte énergie.

Elle concerne en particulier le domaine des systèmes de compression des impulsions lumineuses, ou compresseurs d'impulsions lumineuses, pour comprimer temporellement des impulsions lumineuses.

Elle concerne plus particulièrement un système et un procédé de compression d'impulsions lumineuses brèves ou ultrabrèves.

Elle concerne également un système laser comprenant un système de compression d'impulsions lumineuses.

### ARRIERE-PLAN TECHNOLOGIQUE

L'utilisation de systèmes de compression non-linéaire, tels que décrit dans les documents US 9219344, US 2017/125964, US 2012/002269 et US 5956173, est une méthode régulièrement utilisée pour réduire la durée d'impulsions lumineuses, généralement après dispersion temporelle et amplification. De nombreux systèmes de compression non-linéaire sont connus, reposant essentiellement sur l'élargissement du spectre des impulsions lumineuses incidentes par auto-modulation de phase (ou SPM pour « *Self-Phase Modulation* » selon l'appellation d'origine anglo-saxonne couramment utilisée) dans un milieu solide ou gazeux aux propriétés optiques non-linéaires.

Un système de compression connu consiste à utiliser une fibre à coeur solide. L'efficacité de transmission de ce dispositif est généralement de l'ordre de 80% mais l'énergie incidente des impulsions lumineuses est limitée à quelques microjoules (µJ).

Un autre système de compression consiste à utiliser une fibre creuse remplie de gaz. La fibre creuse se comporte comme un guide d'onde dont la structure permet d'assurer un guidage des impulsions lumineuses avec de faibles pertes (et idéalement sans pertes). Dans ce but, la gaine de la fibre creuse est micro-structurée afin de lui conférer ces propriétés de guidage. L'efficacité en transmission de ce dispositif est donc très haute, typiquement de l'ordre de 90%, à des énergies de plusieurs dizaines de microjoules. Cependant, ces fibres creuses sont limitées en ce qui concerne la robustesse des paramètres du laser (par exemple la stabilité de pointé) ou la préservation de la polarisation incidente.

Un autre système de compression encore consiste à utiliser des lames de matériau. Ces lames de matériau comprennent tous les types de matériaux transparents à la longueur d'onde émise par la source. Il s'agit par exemple de silice fondue (ou « fused silica » selon l'expression d'origine anglo-saxonne couramment utilisée), de cristal de grenat d'yttrium-aluminium (ou cristal de YAG), de fluorure de calcium (CAF₂) ou de titanyl phosphate de potassium (ou KTP). Ce dispositif permet d'obtenir de fortes transmissions mais le facteur de compression doit être limité (typiquement inférieur à 5) afin de préserver la qualité spatiale et spatio-temporelle du faisceau lumineux.

Un autre système de compression encore consiste à utiliser un capillaire rempli de gaz. De forts coefficients de compression sont obtenus (typiquement supérieurs à 10) avec des impulsions de grandes énergies (par exemple supérieures à 1 mJ). Cependant, un capillaire rempli de gaz ne se comporte pas comme un guide d'onde, la propagation des impulsions lumineuses s'effectue donc avec des pertes. Ainsi, afin de limiter les pertes de ce dispositif, un compromis doit être trouvé entre la longueur et le diamètre du capillaire utilisé.

Un autre système de compression enfin consiste à utiliser une cellule multipassage, contenant un gaz ou un élément solide aux propriétés optiques non-linéaires, dans laquelle le faisceau lumineux effectue un certain nombre d'allers-retours. Ce dispositif permet l'obtention de facteurs de compression inférieurs à 10 en assurant une forte efficacité de transmission, typiquement supérieure à 90%. De plus, la qualité spatiale du faisceau lumineux est préservée. Cependant, les propriétés optiques des miroirs utilisés pour la cellule limitent les performances de ce dispositif.

Finalement, aucun des systèmes de compression connus ne permet d'obtenir des impulsions lumineuses brèves ou ultrabrèves, telles qu'une impulsion lumineuse de quelques cycles optiques, par exemple inférieure à 10 cycles optiques, avec à la fois une grande efficacité (typiquement supérieure à 50%) et un taux de compression élevé (typiquement compris entre 10 et 400).

### OBJET DE L'INVENTION

Afin de remédier à l'inconvénient précité de l'état de la technique, la présente invention propose un système de compression d'impulsions lumineuses brèves ou ultrabrèves.

Plus particulièrement, on propose selon l'invention un système de compression d'impulsions lumineuses brèves ou ultrabrèves émises par une source lumineuse. Selon l'invention, le système de compression comporte :
- un premier module de compression non-linéaire d'impulsions lumineuses comprenant une cellule multipassage, la cellule multipassage comprenant un premier milieu optique non-linéaire, et
- un deuxième module de compression non-linéaire d'impulsions lumineuses comprenant un capillaire rempli d'un deuxième milieu optique non-linéaire gazeux et un compresseur disposé en sortie du capillaire,
le premier module de compression non-linéaire et le deuxième module de compression non-linéaire étant disposés en série sur le trajet d'un faisceau lumineux source d'impulsions lumineuses sources, le premier module de compression non-linéaire étant disposé en amont du deuxième module de compression non-linéaire.

De manière avantageuse, l'utilisation d'un premier module de compression comprenant une cellule multipassage et d'un deuxième module de compression comprenant un capillaire permet d'obtenir une forte transmission en énergie des impulsions lumineuses brèves ou ultrabrèves (pouvant avoir une durée inférieure ou égale à quelques cycles optiques). La puissance moyenne transmise en sortie du système de compression est très élevée pour ces durées d'impulsions lumineuses. De plus, la configuration de l'invention permet une grande stabilité du faisceau lumineux dans un système de compression compact.

La combinaison de ce premier module de compression et de ce deuxième module de compression permet d'obtenir une efficacité en énergie supérieure à 50% sans présenter pour autant de dégradations temporelles ou spatio-spectrales.

D'autres caractéristiques non limitatives et avantageuses du système de compression d'impulsions lumineuses brèves ou ultrabrèves conforme à l'invention, prises individuellement ou selon toutes les combinaisons techniquement possibles, sont les suivantes :
- le premier module de compression non-linéaire comprend un autre compresseur disposé en sortie de la cellule multipassage ;
- la cellule multipassage comprend au moins deux miroirs, une zone de propagation du faisceau lumineux source étant définie entre les deux miroirs ;
- les deux miroirs sont dispersifs et la cellule multipassage introduit une dispersion négative ;
- le premier milieu optique non-linéaire de la cellule multipassage comprend un milieu fluide ayant des propriétés optiques non-linéaires ;
- le premier milieu optique non-linéaire de la cellule multipassage comprend un élément optique non-linéaire solide ;
- le premier module de compression non-linéaire comprend un premier système optique de focalisation du faisceau lumineux source, le premier système optique de focalisation étant disposé en entrée dudit premier module de compression non-linéaire, le premier système optique de focalisation étant conçu pour coupler un mode de propagation à la taille du faisceau lumineux source dans une zone de focalisation de la cellule multipassage ;
- le deuxième module de compression non-linéaire comprend un deuxième système optique de focalisation, le deuxième système optique de focalisation étant disposé en entrée dudit deuxième module de compression non-linéaire, le deuxième système optique de focalisation étant conçu pour focaliser un premier faisceau lumineux comprimé émergeant du premier module de compression non-linéaire sur l'entrée du capillaire ;
- le deuxième module de compression non-linéaire comprend un dispositif optique de réglage de dispersion d'un deuxième faisceau lumineux comprimé, ledit dispositif optique étant disposé en sortie du deuxième module de compression non-linéaire d'impulsions lumineuses ;
- l'autre compresseur comprend au moins un miroir dispersif et/ou un réseau de diffraction et/ou un prisme et/ou un interféromètre de Gires-Tournoi, et le compresseur comprend au moins un miroir dispersif et/ou un réseau de diffraction et/ou un prisme et/ou un interféromètre de Gires-Tournoi ; et
- un premier facteur de compression temporelle des impulsions lumineuses en sortie du premier module de compression non-linéaire est supérieur à 1 et inférieur ou égal à 20, de préférence compris entre 5 et 20, et un deuxième facteur de compression temporelle des impulsions lumineuses en sortie du deuxième module de compression non-linéaire est supérieur à 1 et inférieur ou égal à 20, de préférence compris entre 5 et 20.

De façon avantageuse, la combinaison de ce premier module de compression et de ce deuxième module de compression permet d'obtenir un facteur de compression temporelle global supérieur à 10 et pouvant atteindre 400.

L'invention propose également un système laser à impulsions lumineuses comprenant :
- une source lumineuse conçue pour générer des impulsions lumineuses brèves ou ultrabrèves, et,
- un système de compression d'impulsions lumineuses tel que défini précédemment.

L'invention propose également un procédé de compression temporelle d'impulsions lumineuses brèves ou ultrabrèves émises par une source lumineuse.

Selon l'invention, le procédé comporte successivement :
- une première étape de compression non-linéaire d'impulsions lumineuses par un premier module de compression non-linéaire d'impulsions lumineuses, ledit premier module comprenant une cellule multipassage, la cellule multipassage comprenant un premier milieu optique non-linéaire, et
- une deuxième étape de compression non-linéaire d'impulsions lumineuses par un deuxième module de compression non-linéaire d'impulsions lumineuses, ledit deuxième module comprenant un capillaire rempli d'un deuxième milieu optique non-linéaire gazeux et un compresseur disposé en sortie du capillaire,
le premier module de compression non-linéaire et le deuxième module de compression non-linéaire étant disposés en série sur le trajet d'un faisceau lumineux source d'impulsions lumineuses sources, le premier module de compression non-linéaire étant disposé en amont du deuxième module de compression non-linéaire.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 propose une représentation schématique des différents éléments d'un système laser conforme à l'invention ; et
- la figure 2 propose une autre représentation schématique des différents éléments d'un système laser conforme à l'invention.

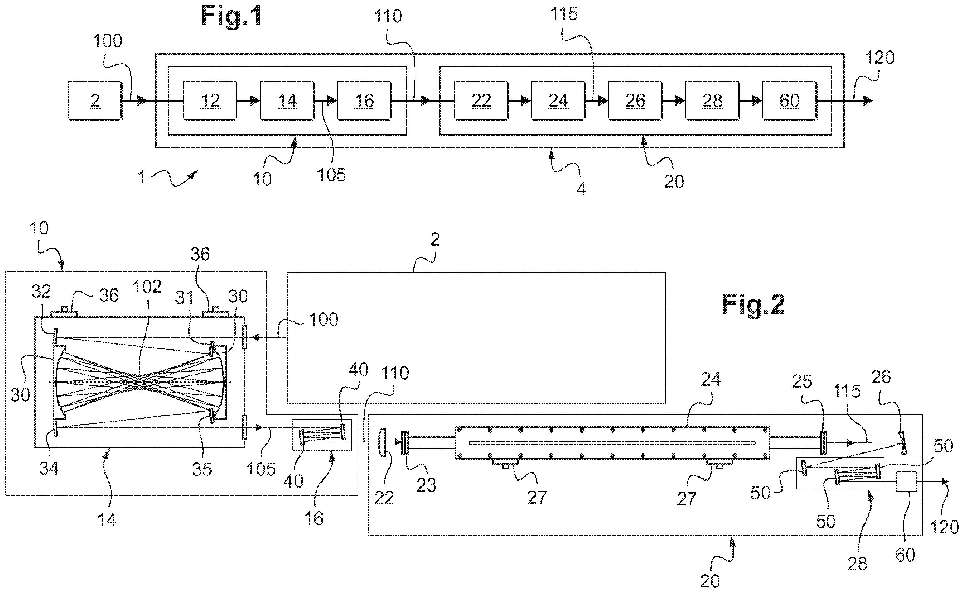

La figure 1 propose une première représentation schématique des différents éléments d'un système laser 1 à impulsions lumineuses selon un exemple de réalisation. La figure 2 propose une autre représentation schématique des différents éléments d'un système laser à impulsions lumineuses conforme à l'invention. Les éléments communs à ces deux figures sont décrits simultanément dans la suite.

Le système laser 1 à impulsions lumineuses comprend une source lumineuse 2 et un système de compression 4 d'impulsions lumineuses.

La source lumineuse 2 est conçue pour générer des impulsions lumineuses brèves ou ultrabrèves. Dans le présent document, on entend par « impulsions lumineuses brèves ou ultrabrèves » des impulsions lumineuses dont la durée est comprise entre quelques femtosecondes (fs) et 100 ps. La durée des impulsions lumineuses émises par la source lumineuse 2 est par exemple comprise entre 200 fs et 400 fs. La source lumineuse 2 présente ici une longueur d'onde centrale de l'ordre de 1030 nanomètres (nm), avec une largeur spectrale à mi-hauteur de l'ordre de 7 nm. En variante, la longueur d'onde centrale de la source lumineuse peut être dans le domaine visible ou le domaine proche infrarouge ou encore le domaine infrarouge moyen.

En pratique ici, la source lumineuse 2 génère des impulsions lumineuses de haute énergie. Dans le présent document, on entend par « impulsions lumineuses de haute énergie » des impulsions lumineuses dont l'énergie est supérieure à 10 µJ, par exemple comprise entre 10 µJ et 500 mJ. Les impulsions lumineuses de haute énergie ont par exemple ici des énergies comprises entre 100 µJ et 1 mJ. En pratique, la source lumineuse 2 est par exemple une source laser Tangerine, laser à fibre en Ytterbium dopé et amplificateur, de la société Amplitude Systèmes. Dans ce cas, la source lumineuse 2 génère des impulsions de durée de l'ordre de 330 fs et d'énergie de l'ordre de 225 µJ par impulsion lumineuse avec une fréquence de répétition de l'ordre de 150 kHz. La puissance moyenne correspondante est alors de l'ordre de 34 W.

Un faisceau lumineux source 100 est formé à partir des impulsions générées en sortie de la source lumineuse 2. En pratique, le facteur de qualité M² du faisceau lumineux source 100 en sortie de la source lumineuse 2 est inférieur à 2. Le facteur de qualité M² du faisceau lumineux source 100 en sortie de la source lumineuse 2 est par exemple égal à 1,4 × 1,2.

Comme visible sur les figures 1 et 2, le faisceau lumineux source 100 est ensuite dirigé vers le système de compression 4 d'impulsions lumineuses, également appelé système de compression 4 dans la suite.

Le système de compression 4 comprend un premier module de compression non-linéaire 10 d'impulsions lumineuses, également appelé un premier module de compression 10 dans la suite, et un deuxième module de compression non-linéaire 20 d'impulsions lumineuses, également appelé deuxième module de compression 20 dans la suite.

Le premier module de compression non-linéaire 10 comprend un premier système optique de focalisation 12 du faisceau lumineux source 100, une cellule multipassage 14. Dans l'exemple illustré, le premier module de compression non-linéaire 10 comprend en outre un premier compresseur 16. Le premier compresseur 16 est aussi appelé autre compresseur dans le présent document.

Le premier système optique de focalisation 12 est disposé en entrée du premier module de compression 10. Le premier système optique de focalisation 12 est positionné en amont de la cellule multipassage 14 dans le premier module de compression non-linéaire 10. Dans cette description, les termes « amont » et « aval » seront utilisés suivant le sens de propagation du faisceau lumineux, de la génération du faisceau lumineux source 100 dans la source lumineuse 2 jusqu'à la sortie du système laser 1.

Le premier système optique de focalisation 12 est conçu pour diriger le faisceau lumineux source 100 vers l'entrée de la cellule multipassage 14. En particulier, le premier système optique de focalisation 12 est conçu pour coupler un mode de propagation à la taille (également appelée « *waist* » selon l'appellation d'origine anglo-saxonne couramment utilisée) du faisceau lumineux source 100 dans une zone de focalisation de la cellule multipassage 14. En pratique, le premier système optique de focalisation 12 comprend par exemple un arrangement de trois lentilles.

La cellule multipassage 14 comprend au moins deux miroirs 30. En pratique, les deux miroirs 30 sont concaves. La dispersion induite par les deux miroirs 30 est en pratique nulle, de même signe ou de signe opposé à la dispersion d'un premier milieu optique non-linéaire disposé dans la cellule multipassage 14 (et décrit ci-après). Par exemple, les miroirs 30 ont un diamètre d'environ 5 cm et un rayon de courbure d'environ 300 mm. Les deux miroirs 30 sont disposés en regard et espacés d'une distance inférieure à deux fois le rayon de courbure des miroirs 30. En pratique, la cellule multipassage 14 est par exemple formée de deux miroirs concaves espacés d'environ 450 mm. Une zone de propagation du faisceau lumineux 102 se propageant dans la cellule multipassage 14 est définie entre les deux miroirs 30.

La cellule multipassage 14 comprend également au moins un élément optique d'introduction 31 du faisceau lumineux source 100 dans la zone de propagation. L'élément optique d'introduction 31 est disposé en entrée de la cellule multipassage 14. L'élément optique d'introduction 31 est conçu pour orienter le faisceau lumineux source 100 vers les miroirs 30. Comme visible sur la figure 2, la cellule multipassage 14 comprend également en option un miroir de renvoi 32 conçu pour réduire l'encombrement de la cellule multipassage 14.

En pratique, l'élément optique d'introduction 31 comprend un miroir plan, par exemple un miroir plan rectangulaire de dimensions 3 mm × 10 mm.

De manière symétrique, la cellule multipassage 14 comprend au moins un élément optique d'extraction 35 du faisceau lumineux 102 de la zone de propagation entre les deux miroirs 30. L'élément optique d'extraction 35 est disposé en sortie de la cellule multipassage 14, en aval des miroirs 30. L'élément optique d'extraction 35 est conçu pour extraire un faisceau lumineux 105 émergeant de la cellule multipassage 14, et émergeant en particulier de la zone de propagation, et le diriger vers la sortie de la cellule multipassage 14. Comme visible sur la figure 2, la cellule multipassage 14 comprend en outre un autre miroir de renvoi 34 en option.

En pratique, l'élément optique d'extraction 35 comprend un miroir plan, par exemple un miroir plan rectangulaire de dimensions 3 mm × 10 mm.

Les éléments optiques d'introduction 31 et d'extraction 35 sont couplés de manière à permettre au faisceau lumineux 105 de parcourir une distance prédéterminée entre les deux miroirs 30, dans la zone de propagation. Par exemple ici, le faisceau lumineux 105 parcourt une distance totale de propagation d'environ 24 m, correspondant à environ 27 allers-retours dans la zone de propagation entre les deux miroirs 30.

La cellule multipassage 14 comprend un premier milieu optique non-linéaire. Ce premier milieu optique non-linéaire favorise l'obtention d'une susceptibilité non-linéaire d'ordre 3 qui est nécessaire à l'auto-modulation de phase. L'interaction des impulsions lumineuses avec ce premier milieu non-linéaire permet un élargissement du spectre de ces impulsions lumineuses.

En pratique, le premier milieu optique non-linéaire s'étend sur la totalité de la distance observée entre les deux miroirs 30. En variante, le premier milieu optique non-linéaire peut couvrir une fraction de la distance entre les deux miroirs 30.

Le premier milieu optique non-linéaire est par exemple un milieu fluide. Par milieu fluide, on entend un milieu gazeux ou un milieu liquide. Ce milieu fluide possède des propriétés optiques non-linéaires.

Par exemple, le premier milieu optique non-linéaire est un milieu gazeux. Le gaz est par exemple de l'argon avec une pression de 5 bars. En variante, le milieu gazeux comprend par exemple tout gaz rare, tel que du xénon, du krypton, du néon ou de l'hélium, ou tout gaz moléculaire, par exemple de l'air. La cellule multipassage 14 comprend alors au moins un élément de transfert de gaz 36. L'élément de transfert de gaz 36 permet l'injection et/ou l'extraction du gaz dans la cellule multipassage 14.

En variante, la cellule multipassage peut être le siège d'un flux de gaz, se propageant grâce aux éléments de transfert 36. En variante encore, la cellule multipassage 14 peut être sous une pression statique de gaz, cette pression peut être inférieure ou supérieure à la pression atmosphérique, par exemple inférieure à 20 bars.

En variante encore, le premier milieu optique non-linéaire peut être un milieu liquide ayant des propriétés optiques non-linéaires. En pratique, le milieu liquide peut comprendre tout type de liquide, par exemple de l'eau, de l'acétone ou du méthanol.

En variante encore, le premier milieu optique non-linéaire peut être un élément optique non linéaire solide disposé dans la zone de propagation entre les deux miroirs 30. L'élément optique non-linéaire solide est par exemple constitué de silice fondue ou de saphir ou de grenat d'yttrium-aluminium (ou cristal de YAG).

En variante encore, le premier milieu non-linéaire peut comprendre une combinaison d'un élément optique non-linéaire solide, couvrant partiellement la distance entre les deux miroirs 30, et d'un milieu fluide.

Dans l'exemple de réalisation représenté sur les figures 1 et 2, le premier compresseur 16 est disposé en sortie du premier module de compression 10. Le premier compresseur 16 est situé en aval de la cellule multipassage 14 dans le premier module de compression 10.

La génération d'impulsions ultracourtes dans un tel système de compression nécessite un contrôle précis des effets dispersifs accumulés dans la cellule multipassage 14, notamment dans le cas de spectre supportant une impulsion de quelques cycles optiques, par exemple inférieur à 10 cycles optiques.

Le premier compresseur 16 est conçu pour comprimer temporellement les impulsions lumineuses du faisceau lumineux 105 émergeant de la cellule multipassage 14. La compression mise en oeuvre dans le premier compresseur 16 est linéaire. Par exemple (figure 2), le premier compresseur 16 comprend deux miroirs dispersifs 40, par exemple introduisant une dispersion totale de délai de groupe de l'ordre de -4900 fs². En variante, le premier compresseur 16 peut comprendre un seul miroir dispersif. En variante, le premier compresseur 16 comprend par exemple un interféromètre de Gires-Tournoi (ou GTI pour « Gires-Tournoi Interferometer » selon l'appellation d'origine anglo-saxonne) ou des miroirs dispersifs dits « chirpés » (également appelés « chirped mirrors » selon l'appellation d'origine anglo-saxonne couramment utilisée).

En variante, le premier compresseur 16 peut comprendre un ou plusieurs réseau(x) de diffraction et/ou un ou plusieurs prisme(s). En variante encore, le premier compresseur 16 peut comprendre une combinaison d'un réseau de diffraction et de prismes.

En variante encore, les miroirs de la cellule multi-passage 14 sont des miroirs dispersifs, par exemple des miroirs de type interféromètre de Gires-Tournoi (ou GTI) ou des miroirs dits « chirpés » de manière à ce que la cellule multipassage, comprenant les miroirs 30 et le premier milieu optique non-linéaire, ait une dispersion nette négative. Dans ce cas, La cellule multipassage applique alors simultanément un élargissement spectral et une première compression temporelle aux impulsions lumineuses. Un phénomène d'auto-compression se produit alors dans la cellule multipassage 14. En variante, dans ce cas, le premier module de compression non-linéaire 10 peut ne pas comporter de premier compresseur 16, la compression ayant lieu uniquement dans la cellule multipassage 14.

Comme introduit précédemment, le dispositif de compression 4 comprend également le deuxième module de compression 20. Ce deuxième module de compression 20 est disposé en série avec le premier module de compression 10 sur le trajet du faisceau lumineux. Le deuxième module de compression 20 est disposé en aval du premier module de compression 10 précédemment introduit.

Le deuxième module de compression 20 comprend un deuxième système optique de focalisation 22, un capillaire 24, un système optique de collimation 26, un deuxième compresseur 28 et un dispositif optique de réglage de dispersion 60 du faisceau lumineux. Le deuxième compresseur 28 est aussi appelé compresseur dans le présent document.

Le deuxième système optique de focalisation 22 est disposé en entrée du deuxième module de compression 20. Le deuxième système optique de focalisation 22 est positionné en amont du capillaire 24 dans le deuxième module de compression 20. Ce deuxième système optique de focalisation 22 est conçu pour focaliser un premier faisceau lumineux 110 comprimé et émergent du premier module de compression 10 sur l'entrée du capillaire 24. Dans un exemple de réalisation, ce deuxième système optique de focalisation 22 assure la stabilité de pointé du premier faisceau lumineux comprimé 110 et permet d'obtenir une stabilité des impulsions lumineuses à court et long termes. En pratique, le deuxième système optique de focalisation 22 comprend une lentille, par exemple de distance focale de l'ordre de *f* = 400 mm.

Le premier faisceau lumineux comprimé 110 se propage ensuite dans le capillaire 24. Le capillaire 24 s'étend sur une longueur prédéterminée, par exemple de l'ordre d'un mètre. Le capillaire 24 possède un diamètre compris entre 50 µm et 10 mm, par exemple de l'ordre de 400 µm. Le capillaire 24 comprend un deuxième milieu optique non-linéaire. Ce deuxième milieu optique non-linéaire favorise l'obtention d'une susceptibilité non-linéaire d'ordre 3 qui est nécessaire à l'auto-modulation de phase. L'interaction des impulsions lumineuses avec ce deuxième milieu non-linéaire permet un élargissement du spectre de ces impulsions lumineuses.

Ce deuxième milieu optique non-linéaire est gazeux. Ce milieu gazeux comprend par exemple tout gaz rare, tel que de l'argon, du xénon, du krypton, du néon ou de l'hélium, ou tout gaz moléculaire, par exemple de l'air ou du diazote. Par exemple ici, le capillaire 24 est rempli de xénon à une pression de 500 mbar. En variante, il peut s'agir du même gaz que celui présent dans la cellule multipassage 14. Le capillaire 24 comprend alors au moins un autre élément de transfert de gaz 27. L'autre élément de transfert de gaz 27 permet l'injection et/ou l'extraction du gaz dans le capillaire 24.

En variante, le capillaire 24 peut être le siège d'un flux de gaz, se propageant grâce aux autres éléments de transfert 27. Dans ce cas, le capillaire 24 est sous une pression différentielle de gaz. Cette pression différentielle est réalisée dans le capillaire en injectant et extrayant le gaz par les autres éléments de transfert 27.

En variante encore, le capillaire 24 peut être sous une pression statique de gaz.

En pratique, le capillaire 24 comprend par exemple une fenêtre d'entrée 23 et une fenêtre de sortie 25 par lesquelles le faisceau lumineux respectivement entre dans et émerge du capillaire 24.

Comme visible sur les figures 1 et 2, le deuxième module de compression 20 comprend également le système optique de collimation 26. Le système optique de collimation 26 est disposé en aval du capillaire 24 sur le trajet d'un faisceau lumineux 115 émergeant du capillaire 24. Ce système optique de collimation 26 est conçu pour collimater le faisceau lumineux 115 émergeant du capillaire 24. En pratique, le système optique de collimation 26 est une lentille ou un miroir parabolique hors-axe ou un miroir sphérique. Par exemple, le système optique de collimation 26 peut être un miroir sphérique de diamètre de l'ordre de 10 mm ou/et de rayon de courbure de l'ordre de 800 mm.

En variante, ce système optique de collimation 26 peut être omis dans le deuxième module de compression 20.

Le deuxième compresseur 28 est ensuite disposé en sortie du deuxième module de compression 20. Le deuxième compresseur 28 est positionné en aval du système optique de collimation 26 dans le deuxième module de compression 20.

Le deuxième compresseur 28 est conçu pour comprimer temporellement les impulsions lumineuses du faisceau lumineux 115 émergeant du capillaire 24 et du système optique de collimation 26. La compression mise en oeuvre dans le deuxième compresseur 28 est linéaire. Dans l'exemple de la figure 2, le deuxième compresseur 28 comprend au moins deux miroirs dispersifs 50, par exemple introduisant une dispersion totale de délai de groupe de l'ordre de -300 fs². En variante, le deuxième compresseur 28 peut comprendre un seul miroir dispersif. En variante, le deuxième compresseur 28 comprend un interféromètre de Gires-Tournoi (GTI) ou des miroirs dits « chirpés ».

Le deuxième compresseur 28 reçoit le faisceau lumineux 115 émergeant du capillaire 24 et génère un faisceau lumineux comprimé 120.

Comme représenté sur la figure 1, le dispositif optique de réglage de dispersion 60 du deuxième faisceau lumineux comprimé 120 est disposé en sortie du deuxième module de compression 20. Le dispositif optique de réglage de dispersion 60 est positionné en aval du deuxième compresseur 28. Le dispositif optique de réglage de dispersion 60 est conçu pour ajuster finement la dispersion du deuxième faisceau lumineux comprimé 120 en sortie du deuxième module de compression 20. En pratique, le dispositif optique de réglage de dispersion 60 comprend deux lames de matériau dont l'épaisseur est variable. L'insertion de ces lames le long de la propagation du deuxième faisceau lumineux comprimé 120 permet d'introduire une quantité variable de dispersion de vitesse de groupe, cette quantité dépendant de l'épaisseur de matériau traversée. Par exemple, le dispositif optique de réglage de dispersion 60 peut comprendre au moins un prisme, de préférence une paire de prismes en CaF₂. Les deux prismes de cette paire sont positionnés de manière à ne pas introduire de dispersion angulaire pour le deuxième faisceau lumineux comprimé 120.

En variante, le dispositif optique de réglage de dispersion 60 peut être omis du deuxième module de compression 20.

Le système laser 1 à impulsions lumineuses décrit ci-dessus permet de mettre en oeuvre le procédé suivant de compression d'impulsions lumineuses. Ce procédé est particulièrement adapté pour la compression d'impulsions lumineuses brèves ou ultrabrèves.

Selon le procédé de l'invention, la source lumineuse 2 génère une pluralité d'impulsions lumineuses brèves ou ultrabrèves et de haute énergie. Comme dans l'exemple indiqué plus haut, la source lumineuse 2 présente ici une longueur d'onde centrale de l'ordre de 1030 nm, avec une largeur spectrale à mi-hauteur de l'ordre de 7 nm. Ici, la source lumineuse 2 génère des impulsions lumineuses de durée égale à 330 fs et d'énergie de l'ordre de 225 µJ par impulsion lumineuse avec une fréquence de répétition comprise entre 1 Hz et 100 MHz, par exemple de l'ordre de 150 kHz. La puissance moyenne correspondante est alors de l'ordre de 34 W.

Le procédé conforme à l'invention permet d'obtenir, en sortie du système laser 1, des impulsions de durée encore plus courte tout en maintenant une efficacité de transmission en énergie.

A ce propos, le procédé comporte deux étapes de compression successives : une première étape de compression non-linéaire et une deuxième étape de compression non-linéaire.

La première étape de compression non-linéaire est exécutée dans le premier module de compression non-linéaire 10. Le faisceau lumineux source 100 formé à partir des impulsions lumineuses générées par la source lumineuse 2 est dirigé par le premier système optique de focalisation 12 vers la cellule multipassage 14.

Le faisceau lumineux source 100 est ensuite introduit dans la zone de propagation entre les deux miroirs 30 de la cellule multipassage 14 grâce aux éléments optiques d'introduction 31 et de renvoi 32.

Comme décrit précédemment, le faisceau lumineux 102 effectue un nombre prédéterminé d'allers-retours, ici 27, dans la zone de propagation qui contient le gaz argon entre les deux miroirs 30. La pression du gaz est en outre ajustée afin d'obtenir un élargissement spectral souhaité par effet optique non-linéaire. Les éléments optiques d'extraction 35 et de renvoi 34 extraient alors le faisceau lumineux 105 émergeant de la cellule multipassage 14 de la zone de propagation pour le diriger vers la sortie de la cellule multipassage 14. La cellule multipassage 14 permet l'élargissement spectral du faisceau lumineux 105 émergeant de la cellule multipassage 14. Par exemple, la largeur spectrale à -10 dB est de l'ordre de 65 nm.

En sortie de la cellule multipassage 14, les impulsions lumineuses du faisceau lumineux 105 sont comprimées temporellement dans le premier compresseur 16. Ainsi, en sortie du premier module de compression 10, la durée des impulsions lumineuses est de l'ordre de 40 fs avec un rapport de Strehl temporel, caractérisant le rapport entre la puissance crête effectivement obtenue et la puissance crête atteignable pour une compression idéale (c'est-à-dire en considérant une phase spectrale constante sur tout le spectre), de l'ordre de 87%. Un premier facteur de compression de ce premier module de compression 10 est alors supérieur à 1, par exemple compris entre 1 et 20, par exemple de l'ordre de 8. De manière générale, la valeur maximale du premier facteur de compression dépend de la bande spectrale maximale réfléchie par les miroirs de la cellule multipassage 14. La transmission du premier module de compression 10, en tenant compte du système optique de focalisation 12 et des miroirs dispersifs du premier compresseur 16, est de l'ordre de 85%. En sortie du premier module de compression 10, l'énergie des impulsions lumineuses est alors de l'ordre de 190 µJ, correspondant alors à une puissance moyenne d'environ 28,7 W. Le facteur de qualité M² du premier faisceau lumineux comprimé 110 en sortie du premier module de compression 10 est égal à 1,2 × 1,2. Ainsi, la cellule multipassage 14 permet de réduire fortement la durée d'impulsion (dans la limite possible définie par les miroirs) tout en conservant une forte transmission en énergie des impulsions lumineuses.

Le procédé conforme à l'invention se poursuit ensuite par la deuxième étape de compression non-linéaire.

La deuxième étape de compression non-linéaire est exécutée dans le deuxième module de compression non-linéaire 20. En sortie du premier module de compression 10, le premier faisceau lumineux comprimé 110 est dirigé vers le deuxième module de compression 20. En pratique, le deuxième système optique de focalisation 22 dirige le premier faisceau lumineux comprimé 110 vers le capillaire 24 rempli de gaz xénon.

Le capillaire 24 permet la propagation du faisceau lumineux issu d'impulsions lumineuses de forte énergie. Le diamètre du capillaire 24 est relativement grand, de préférence de l'ordre de 400 µm ce qui permet de recevoir les impulsions lumineuses de forte énergie et d'augmenter la transmission du système de compression 4. Le capillaire 24 permet une propagation guidée du premier faisceau lumineux comprimé 110 et l'élargissement spectral par auto-modulation de phase (ou « self-phase modulation (SPM) » selon l'appellation d'origine anglo-saxonne couramment utilisée). En particulier, le gaz xénon compris dans le capillaire 24 permet un élargissement spectral de 800 nm à 1200 nm, avec une largeur spectrale à -10 dB de l'ordre de 430 nm.

Après propagation dans le gaz remplissant le capillaire 24, le faisceau lumineux 115 émergeant du capillaire 24 est dirigé et collimaté par le système optique de collimation 26 pour être ensuite comprimé temporellement dans le deuxième compresseur 28. Le deuxième compresseur 28, comprenant par exemple les miroirs dispersifs 50, permet de comprimer temporellement le faisceau lumineux 115 émergeant du capillaire 115 en introduisant une dispersion de vitesse de groupe négative. La dispersion peut en outre être ajustée finement en sortie du deuxième module de compression 20 grâce au dispositif optique de réglage de dispersion 60.

En sortie du deuxième module de compression 20, la durée des impulsions lumineuses est de l'ordre de 6 fs avec un rapport de Strehl temporel de l'ordre de 69%. Cette durée d'impulsions lumineuses est particulièrement avantageuse, en particulier pour les énergies mises en jeu, car elle est de quelques cycles optiques. Ici, cette durée correspond à deux cycles optiques à 1030 nm. La transmission du deuxième module de compression 20, en tenant compte du deuxième système optique de focalisation 22 et des miroirs dispersifs 50 du deuxième compresseur 28, est de l'ordre de 72%. Un deuxième facteur de compression de ce deuxième module de compression 20 est alors compris entre 2 et 20, par exemple de l'ordre de 7. En sortie du deuxième module de compression 20, l'énergie des impulsions lumineuses est alors de l'ordre de 150 µJ, correspondant à une puissance moyenne de l'ordre de 23 W. Le facteur de qualité M² du faisceau lumineux en sortie du deuxième module de compression 20 est égal à 1,2 × 1,2. Le capillaire 24 présente une bande spectrale très large, il ne limite donc pas la transmission du spectre du faisceau lumineux, contrairement à une fibre creuse à gaine microstructurée qui limite la bande spectrale de transmission en imposant des bandes de transmission interdites. Le capillaire 24 permet d'obtenir un facteur de compression élevé et la génération d'impulsions brèves ou ultrabrèves d'une durée inférieure ou égale à quelques cycles optiques. De plus, le capillaire 24 permet de conférer au faisceau lumineux de sortie une excellente qualité spatiale.

Finalement, le facteur de compression temporelle des impulsions lumineuses en sortie du système laser 1 est compris entre 10 et 400. La transmission totale du système de compression 4 d'impulsions lumineuses est supérieure à 50%, typiquement de l'ordre de 61%, avec en sortie une durée des impulsions lumineuses de l'ordre de 6 fs et une énergie de l'ordre de 150 µJ par impulsion lumineuse avec une fréquence de répétition comprise entre 1 Hz et 100 MHz, par exemple de l'ordre de 150 kHz. La puissance moyenne correspondante est alors de l'ordre de 24 W.

Ainsi, la combinaison d'un premier module de compression comprenant une cellule multipassage et d'un deuxième module de compression comprenant un capillaire permet d'obtenir une transmission en énergie supérieure à 50% (ce qui n'est pas possible par exemple en utilisant deux capillaires), de générer des impulsions brèves ou ultrabrèves d'une durée inférieure ou égale à quelques cycles optiques quelle que soit l'énergie du faisceau lumineux incident (ce qui n'est pas possible par exemple avec l'utilisation de deux cellules multipassages ou avec deux fibres à coeur creux) et de générer des impulsions de forte énergie et/ou ayant une bonne qualité spatiale (ce qui n'est pas le cas par exemple avec l'utilisation de deux lames de matériau ou de deux fibres à coeur solide).

Le système laser 1 tel que décrit dans l'invention trouve une application avantageuse dans le cas de systèmes à faible nombre de cycles optiques par impulsions lumineuses, typiquement dans le cas de durées très courtes, par exemple inférieures à 30 fs. Cela s'applique particulièrement dans le cas de système laser comprenant des sources émettant dans l'extrême Ultraviolet ou les rayons X.

## Revendications

1. Système de compression (4) d'impulsions lumineuses brèves ou ultrabrèves émises par une source lumineuse (2),
**caractérisé en ce que** ledit système de compression (4) comporte :
- un premier module de compression non-linéaire (10) d'impulsions lumineuses comprenant une cellule multipassage (14), la cellule multipassage (14) comprenant un premier milieu optique non-linéaire, et
- un deuxième module de compression non-linéaire (20) d'impulsions lumineuses comprenant un capillaire (24) rempli d'un deuxième milieu optique non-linéaire gazeux et un compresseur (28) disposé en sortie du capillaire (24),
le premier module de compression non-linéaire (10) et le deuxième module de compression non-linéaire (20) étant disposés en série sur le trajet d'un faisceau lumineux source (100) d'impulsions lumineuses sources, le premier module de compression non-linéaire (10) étant disposé en amont du deuxième module de compression non-linéaire (20).

2. Système de compression (4) selon la revendication 1, dans lequel le premier module de compression non-linéaire (10) comprend un autre compresseur (16) disposé en sortie de la cellule multipassage (14).

3. Système de compression (4) d'impulsions lumineuses selon la revendication 1 ou 2, dans lequel la cellule multipassage (14) comprend au moins deux miroirs (30), une zone de propagation du faisceau lumineux source (100) étant définie entre les deux miroirs (30).

4. Système de compression (4) d'impulsions lumineuses selon la revendication 3, dans lequel, les deux miroirs (30) étant dispersifs, la cellule multipassage (14) introduit une dispersion négative.

5. Système de compression (4) d'impulsions lumineuses selon l'une quelconque des revendications 1 à 4, dans lequel le premier milieu optique non-linéaire de la cellule multipassage (14) comprend un milieu fluide ayant des propriétés optiques non-linéaires.

6. Système de compression (4) d'impulsions lumineuses selon l'une quelconque des revendications 1 à 5, dans lequel le premier milieu optique non-linéaire de la cellule multipassage (14) comprend un élément optique non-linéaire solide.

7. Système de compression (4) d'impulsions lumineuses selon l'une quelconque des revendications 1 à 6, dans lequel le deuxième module de compression non-linéaire (20) comprend un dispositif optique de réglage de dispersion (60) d'un deuxième faisceau lumineux comprimé (120), ledit dispositif optique (60) étant disposé en sortie du deuxième module de compression non-linéaire (20) d'impulsions lumineuses.

8. Système de compression (4) d'impulsions lumineuses selon l'une quelconque des revendications 2 à 7, dans lequel l'autre compresseur (16) comprend au moins un miroir dispersif et/ou un réseau de diffraction et/ou un prisme et/ou un interféromètre de Gires-Tournoi et dans lequel le compresseur (28) comprend au moins un miroir dispersif et/ou un réseau de diffraction et/ou un prisme et/ou un interféromètre de Gires-Tournoi.

9. Système de compression (4) d'impulsions lumineuses selon l'une quelconque des revendications 1 à 8, dans lequel un premier facteur de compression temporelle des impulsions lumineuses en sortie du premier module de compression non-linéaire (10) est supérieur à 1 et inférieur ou égal à 20, et dans lequel un deuxième facteur de compression temporelle des impulsions lumineuses en sortie du deuxième module de compression non-linéaire (20) est supérieur à 1 et inférieur ou égal à 20.

10. Système laser (1) à impulsions lumineuses comprenant :
- une source lumineuse (2) conçue pour générer des impulsions lumineuses brèves ou ultrabrèves, et,
- un système de compression (4) d'impulsions lumineuses selon l'une quelconque des revendications 1 à 9.

11. Procédé de compression temporelle d'impulsions lumineuses brèves ou ultrabrèves émises par une source lumineuse (2),
**caractérisé en ce que** ledit procédé comporte successivement :
- une première étape de compression non-linéaire d'impulsions lumineuses par un premier module de compression non-linéaire (10) d'impulsions lumineuses, ledit premier module (10) comprenant une cellule multipassage (14), la cellule multipassage (14) comprenant un premier milieu optique non-linéaire, et
- une deuxième étape de compression non-linéaire d'impulsions lumineuses par un deuxième module de compression non-linéaire (20) d'impulsions lumineuses, ledit deuxième module (20) comprenant un capillaire (24) rempli d'un deuxième milieu optique non-linéaire gazeux et un compresseur (28) disposé en sortie du capillaire (24),
le premier module de compression non-linéaire (10) et le deuxième module de compression non-linéaire (20) étant disposés en série sur le trajet d'un faisceau lumineux source (100) d'impulsions lumineuses sources, le premier module de compression non-linéaire (10) étant disposé en amont du deuxième module de compression non-linéaire (20).

## Patentansprüche

1. System (4) zum Komprimieren von von einer Lichtquelle (2) ausgesandten kurzen oder ultrakurzen Lichtimpulsen,
**dadurch gekennzeichnet, daß** das Kompressionssystem (4)
- ein erstes nicht lineares Modul (10) zum Komprimieren von Lichtimpulsen mit einer Mehrfachdurchlaufzelle (14), wobei die Mehrfachdurchlaufzelle (14) ein erstes nicht lineares optisches Medium aufweist, und
- ein zweites nicht lineares Modul (20) zum Komprimieren von Lichtimpulsen mit einer mit einem zweiten nicht linearen gasförmigen Medium gefüllten Kapillare (24) und einem am Ausgang der Kapillare (24) angeordneten Kompressor (28) aufweist,
wobei das erste nicht lineare Kompressionsmodul (10) und das zweite nicht lineare Kompressionsmodul (20) in Reihe auf dem Weg eines Quellenlichtstrahls (100) von Quellenlichtimpulsen angeordnet sind, wobei das erste nicht lineare Kompressionsmodul (10) vor dem zweiten nicht linearen Kompressionsmodul (20) angeordnet ist.

2. Kompressionssystem (4) gemäß Anspruch 1, bei dem das erste nicht lineare Kompressionsmodul (10) einen weiteren Kompressor (16) aufweist, der am Ausgang der Mehrfachdurchlaufzelle (14) angeordnet ist.

3. System (4) zum Komprimieren von Lichtimpulsen gemäß Anspruch 1 oder 2, bei dem die Mehrfachdurchlaufzelle (14) mindestens zwei Spiegel (30) aufweist, wobei eine Ausbreitungszone des Quellenlichtstrahls (100) zwischen den beiden Spiegeln definiert ist.

4. System (4) zum Komprimieren von Lichtimpulsen gemäß Anspruch 3, bei dem die Mehrfachdurchlaufzelle (14) eine negative Dispersion bewirkt, da die beiden Spiegel (30) negativ dispersiv sind.

5. System (4) zum Komprimieren von Lichtimpulsen gemäß einem der Ansprüche 1 bis 4, bei dem das erste nicht lineare optische Medium der Mehrfachdurchlaufzelle (14) ein flüssiges Medium mit nicht linearen optischen Eigenschaften aufweist.

6. System (4) zum Komprimieren von Lichtimpulsen gemäß einem der Ansprüche 1 bis 5, bei dem das erste nicht lineare optische Medium der Mehrfachdurchlaufzelle (14) ein festes nicht lineares optisches Element aufweist.

7. System (4) zum Komprimieren von Lichtimpulsen gemäß einem der Ansprüche 1 bis 6, bei dem das zweite nicht lineare Kompressionsmodul (20) eine optische Vorrichtung (60) zum Einstellen der Dispersion eines zweiten komprimierten Lichtstrahls (120) aufweist, wobei die optische Vorrichtung (60) am Ausgang des zweiten nicht linearen Moduls (20) zum Komprimieren von Lichtimpulsen angeordnet ist.

8. System (4) zum Komprimieren von Lichtimpulsen gemäß einem der Ansprüche 2 bis 7, bei dem der weitere Kompressor (16) mindestens einen dispergierenden Spiegel und/oder ein Beugungsgitter und/oder ein Prisma und/oder ein Gires-Toumoi-Interferometer aufweist und bei dem der Kompressor (28) mindestens einen dispergierenden Spiegel und/oder ein Beugungsgitter und/oder ein Prisma und/oder ein Gires-Tournoi-Interferometer aufweist.

9. System (4) zum Komprimieren von Lichtimpulsen gemäß einem der Ansprüche 1 bis 8, bei dem ein erster Faktor zeitlicher Kompression der Lichtimpulse am Ausgang des ersten nicht linearen Kompressionsmoduls (10) größer als 1 und kleiner als oder gleich 20 ist und bei dem ein zweiter Faktor zeitlicher Kompression der Lichtimpulse am Ausgang des zweiten nicht linearen Kompressionsmoduls (20) größer als 1 und kleiner als oder gleich 20 ist.

10. Lasersystem (4) mit Lichtimpulsen, das
- eine Lichtquelle (2), die dazu ausgelegt ist, kurze oder ultrakurze Lichtimpulse zu erzeugen, und
- ein System (4) zum Komprimieren von Lichtimpulsen gemäß einem der Ansprüche 1 bis 9
aufweist.

11. Verfahren zum zeitlichen Komprimieren von von einer Lichtquelle (2) ausgesandten kurzen oder ultrakurzen Lichtimpulsen,
**dadurch gekennzeichnet, daß** das Verfahren nacheinander
- einen ersten Schritt nicht linearer Kompression von Lichtimpulsen durch ein erstes nicht lineares Modul (10) zum Komprimieren von Lichtimpulsen, wobei das erste Modul (10) eine Mehrfachdurchlaufzelle (14) aufweist, wobei die Mehrfachdurchlaufzelle (14) ein erstes nicht lineares optisches Medium aufweist, und
- einen zweiten Schritt nicht linearer Kompression von Lichtimpulsen durch ein zweites nicht lineares Modul (20) zum Komprimieren von Lichtimpulsen, wobei das zweite Modul (20) eine mit einem zweiten nicht linearen gasförmigen Medium gefüllten Kapillare (24) und einem am Ausgang der Kapillare (24) angeordneten Kompressor (28) aufweist,
aufweist,
wobei das erste nicht lineare Kompressionsmodul (10) und das zweite nicht lineare Kompressionsmodul (20) in Reihe auf dem Weg eines Quellenlichtstrahls (100) von Quellenlichtimpulsen angeordnet sind, wobei das erste nicht lineare Kompressionsmodul (10) vor dem zweiten nicht linearen Kompressionsmodul (20) angeordnet ist.

## Claims

1. A system (4) for compressing short or ultra-short light pulses emitted by a light source (2),
**characterized in that** said compression system (4) comprises:
- a first non-linear light pulse compression module (10) comprising a multi-pass cell (14), the multi-pass cell (14) comprising a first non-linear optical medium, and
- a second non-linear light pulse compression module (20) comprising a capillary (24) filled with a second gaseous non-linear optical medium and a compressor (28) arranged at the output of the capillary (24),
the first non-linear compression module (10) and the second non-linear compression module (20) being arranged in series on the path of a source light beam (100) of source light pulses, the first non-linear compression module (10) being arranged upstream of the second non-linear compression module (20).

2. The compression system (4) according to claim 1, wherein the non-linear compression module (10) comprises another compressor (16) arranged at the output of the multi-pass cell (14).

3. The light pulse compression system (4) according to claim 1 or 2, wherein the multi-pass cell (14) comprises at least two mirrors (30), an area of propagation of the source light beam (100) being defined between the two mirrors (30).

4. The light pulse compression system (4) according to claim 3, wherein, the two mirrors (30) being dispersive, the multi-pass cell (14) introduces a negative dispersion.

5. The light pulse compression system (4) according to any one of claims 1 to 4, wherein the first non-linear optical medium of the multi-pass cell (14) comprises a fluid medium having non-linear optical properties.

6. The light pulse compression system (4) according to any one of claims 1 to 5, wherein the first non-linear optical medium of the multi-pass cell (14) comprises a solid non-linear optical element.

7. The light pulse compression system (4) according to any one of claims 1 to 6, wherein the second non-linear compression module (20) comprises an optical device (60) for adjusting the dispersion of a second compressed light beam (120), said optical device (60) being arranged at the output of the second non-linear light beam compression module (20).

8. The light pulse compression system (4) according to any one of claims 2 to 7, wherein the other compressor (16) comprises at least one dispersive mirror and/or a diffraction grating and/or a prism and/or a Gires-Tournoi interferometer, and wherein the compressor (28) comprises at least one dispersive mirror and/or a diffraction grating and/or a prism and/or a Gires-Tournoi interferometer.

9. The light pulse compression system (4) according to any one of claims 1 to 8, wherein a first factor of temporal compression of the light pulses at the output of the first non-linear compression module (10) is higher than 1 and lower than or equal to 20, and wherein a second factor of temporal compression of the light pulses at the output of the second non-linear compression module (20) is higher than 1 and lower than or equal to 20.

10. A light pulse laser system (1) comprising:
- a light source (2) designed to generate short or ultra-short light pulses, and
- a light pulse compression system (4) according to any one of claims 1 to 9.

11. A method for temporally compressing short or ultra-short light pulses emitted by a light source (2),
**characterized in that** said method comprises successively:
- a first step of non-linear light pulse compression by a first non-linear light pulse compression module (10), said first module (10) comprising a multi-pass cell (14), the multi-pass cell (14) comprising a first non-linear optical medium, and
- a second step of non-linear light pulse compression by a second non-linear light pulse compression module (20), said second module (20) comprising a capillary (24) filled with a second gaseous non-linear optical medium and a compressor (28) arranged at the output of the capillary (24),
the first non-linear compression module (10) and the second non-linear compression module (20) being arranged in series on the path of a source light beam (100) of source light pulses, the first non-linear compression module (10) being arranged upstream of the second non-linear compression module (20).
